# EUROPÄISCHE PATENTSCHRIFT

(11) **EP 3 989 504 B1**
(45) Veröffentlichungstag und Bekanntmachung des Hinweises auf die Patenterteilung: **07.06.2023**
(21) Anmeldenummer: 20203656.2
(22) Anmeldetag: 23.10.2020
(51) Int. Cl.: H04L 9/40, H04W 12/06, H04W 4/02

(54) **VERFAHREN ZUR AUTHENTIFIZIERTEN KOMMUNIKATION ZWISCHEN EINEM ERSTEN KOMMUNIKATIONSPARTNER UND EINEM ZWEITEN KOMMUNIKATIONSPARTNER, WOBEI DER ERSTE KOMMUNIKATIONSPARTNER UND/ODER DER ZWEITE KOMMUNIKATIONSPARTNER EIN VERKEHRSTEILNEHMER UND/ODER TEIL EINER VERKEHRSINFRASTRUKTUR IST, SYSTEM, KOMMUNIKATIONSPARTNER, COMPUTERPROGRAMM UND COMPUTERLESBARES MEDIUM**
METHOD FOR AUTHENTICATED COMMUNICATION BETWEEN A FIRST COMMUNICATION PARTNER AND A SECOND COMMUNICATION PARTNER, WHERE THE FIRST COMMUNICATION PARTNER AND / OR THE SECOND COMMUNICATION PARTNER IS A TRAFFIC PARTICIPANT AND / OR PART OF A TRAFFIC INFRASTRUCTURE, SYSTEM, COMMUNICATION PARTNER, COMPUTER PROGRAM, AND COMPUTER READABLE MEDIUM
PROCÉDÉ DE COMMUNICATION AUTHENTIFIÉE ENTRE UN PREMIER PARTENAIRE DE COMMUNICATION ET UN SECOND PARTENAIRE DE COMMUNICATION, LE PREMIER PARTENAIRE DE COMMUNICATION ET/OU LE SECOND PARTENAIRE DE COMMUNICATION ÉTANT UN ABONNÉ DU TRAFIC OU UNE PARTIE D'UNE INFRASTRUCTURE DU TRAFIC, SYSTÈME, PARTENAIRE DE COMMUNICATION, PROGRAMME INFORMATIQUE ET SUPPORT LISIBLE PAR ORDINATEUR

(43) Veröffentlichungstag der Anmeldung: 27.04.2022
(73) Patentinhaber: Deutsche Telekom AG, 53113 Bonn (DE)
(72) Erfinder: SUDHOLT, Frank, 53604 Bad Honnef (DE); WITYCH, Michael, 53227 Bonn (DE); SCHMITT, Florian-Leon, 53227 Bonn (DE)
(74) Vertreter: Schwöbel, Thilo K.

(56) Entgegenhaltungen:
- US-A1- 2020 244 671
- ANDREICA TUDOR ET AL: "Secure V2V Communication with Identity-based Cryptography from License Plate Recognition", 2019 SIXTH INTERNATIONAL CONFERENCE ON INTERNET OF THINGS: SYSTEMS, MANAGEMENT AND SECURITY (IOTSMS), IEEE, 22. Oktober 2019 (2019-10-22), Seiten 366-373, XP033676661, [gefunden am 2019-12-20]
- RICH KENNEDY (MEDIATEK): "NHTSA Repoert on V2V Communications", IEEE DRAFT; 18-14-0061-00-0000-NHTSA-REPOERT-ON-V2V-CO MMUNICATIONS, IEEE-SA MENTOR, PISCATAWAY, NJ USA , Bd. 802.18 21. August 2014 (2014-08-21), Seiten 1-327, XP068156782, Gefunden im Internet: URL:https://mentor.ieee.org/802.18/dcn/14/ 18-14-0061-00-0000-nhtsa-repoert-on-v2v-co mmunications.pdf [gefunden am 2014-08-21]

## Beschreibung

### Stand der Technik

Die Erfindung betrifft ein Verfahren zur authentifizierten Kommunikation zwischen einem ersten Kommunikationspartner und einem zweiten Kommunikationspartner, wobei der erste Kommunikationspartner und/oder der zweite Kommunikationspartner ein Verkehrsteilnehmer und/oder Teil einer Verkehrsinfrastruktur ist, insbesondere ein teilautonom oder autonom gesteuertes, sich bewegendes Fahrzeug oder ein stationäres Objekt.

Die Erfindung betrifft des Weiteren ein System zur authentifizierten Kommunikation zwischen einem ersten Kommunikationspartner und einem zweiten Kommunikationspartner, wobei der erste Kommunikationspartner und/oder der zweite Kommunikationspartner ein Verkehrsteilnehmer und/oder Teil einer Verkehrsinfrastruktur ist, insbesondere ein teilautonom oder autonom gesteuertes, sich bewegendes Fahrzeug oder ein stationäres Objekt.

Die Erfindung betrifft ferner einen Kommunikationspartner zur authentifizierten Kommunikation zwischen einem ersten Kommunikationspartner und einem zweiten Kommunikationspartner als Teil eines erfindungsgemäßen Systems.

Des Weiteren betrifft die Erfindung ein Computerprogramm umfassend Befehle, mit deren Hilfe die Schritte eines erfindungsgemäßen Verfahrens durchführbar sind, und ein computerlesbares Medium, vorgesehen zur Speicherung eines Computerprogramms, oder ein Datenträgersignal, vorgesehen zur Übertragung eines Computerprogramms, wobei das computerlesbare Medium oder das Datenträgersignal das erfindungsgemäße Computerprogramm speichert oder überträgt.

Zur Realisierung von zukünftigen Verkehrssystemen, insbesondere umfassend autonom fahrende bzw. autonom gesteuerte Fahrzeuge, ist es wünschenswert, wenn möglichst viele Verkehrsteilnehmer in der Lage sind - insbesondere mittels direkter vehicle-to-vehicle-Kommunikation - Informationen bzw. Nachrichten auszutauschen, insbesondere um das Sicherheitsniveau zu erhöhen und die Anzahl und Schwere von Gefahrensituationen oder Gefährdungen sowohl von Personen als auch von Fahrzeugen oder Verkehrsinfrastruktureinrichtungen zu vermindern. Eine Voraussetzung bzw. die Grundlage für den Austausch bzw. die Übertragung von solchen Informationen bzw. solchen Nachrichten ist, dass die Informationen bzw. Nachrichten möglichst vertrauenswürdig übertragen werden, d.h. es sollte sowohl ein hohes Maß an Authentizität bzw. Authentifizierbarkeit des Nachrichteninhalts selbst als auch ein hohes Maß an Authentizität bzw. Authentifizierbarkeit des Absenders der Nachricht (insbesondere durch den Empfänger der Nachricht) möglich sein und insbesondere auch ermöglicht werden, dass zum einen eine sehr schnelle Übertragung von Nachrichten realisierbar ist (insbesondere für Gefahrenmeldungen, etc.) und zum anderen auch dass bei einer Kommunikation unter Verwendung von Broadcast-Nachrichten dennoch eine gesicherte Authentisierung und bei Bedarf auch die Übertragung von vertraulichen/verschlüsselten Nachtrichteninhalten realisierbar ist.

Hierzu ist aus dem Artikel "Secure V2V Communication with Identity-based Cryptography from License Plate Recognition" (T. Andreica and B. Groza, Sixth International Conference on Internet of Things: Systems, Management and Security (IOTSMS), 2019, pp. 366-373) ein Verfahren bekannt, bei dem zwei Fahrzeuge einen Diffie-Hellman-Schlüsselaustausch durchführen, wobei die dabei verwendeten öffentlichen Schlüssel aus den optisch erfassten Kraftfahrzeugkennzeichen der beiden Kommunikationspartner abgeleitet werden.

### Offenbarung der Erfindung

Der Erfindung liegt die Aufgabe zugrunde, ein Verfahren zur authentifizierten Kommunikation zwischen einem ersten Kommunikationspartner und einem zweiten Kommunikationspartner bereitzustellen, wobei der erste Kommunikationspartner und/oder der zweite Kommunikationspartner ein Verkehrsteilnehmer und/oder Teil einer Verkehrsinfrastruktur ist, insbesondere ein teilautonom oder autonom gesteuertes, sich bewegendes Fahrzeug oder ein stationäres Objekt, wobei der erste und zweite Kommunikationspartner zu unterschiedlichen Zeitpunkten potentiell unterschiedliche Positionen aufweisen, wobei es das Verfahren in vergleichsweise einfacher und effizienter Weise ermöglicht, sowohl eine schnelle Kommunikation zu ermöglichen als auch eine sichere bzw. abgesicherte (bzw. verifizierbare) Kommunikation zu ermöglichen.

Die Aufgabe wird erfindungsgemäß gelöst durch ein Verfahren nach Anspruch 1.

Es ist dadurch gemäß der vorliegenden Erfindung in vorteilhafter Weise möglich, dass eine Kommunikation mit Broadcast-Nachrichten realisiert werden kann und dennoch eine gesicherte Authentisierung sowie auch bei Bedarf eine vertrauliche Kommunikation mit der Übertragung verschlüsselter Nachrichteninhalten möglich ist. Insbesondere stellt die vorliegende Erfindung eine Möglichkeit zur Identitätsprüfung bereit, insbesondere basierend auf bzw. unterstützt von Positionsprüfungen, da optisch detektierbare Identitätsinformationen an einer verifizierbaren Position überprüft werden können. Ferner ist es erfindungsgemäß insbesondere vorteilhaft möglich, dass die Kommunikation besonders schnell durchgeführt werden kann, so dass insbesondere auch die Kommunikation für den Fall von Gefahrensituationen adressierbar ist.

Gemäß der vorliegenden Erfindung ist es vorgesehen, dass - zusätzlich zur Verifizierung der Signaturinformation - durch einen Vergleich der ersten und zweiten Entfernungsinformation durch den zweiten Kommunikationspartner die Identität des ersten Kommunikationspartners verifiziert wird und/oder dass - zusätzlich zur Verifizierung der weiteren Signaturinformation - durch einen Vergleich der ersten und zweiten Entfernungsinformation durch den ersten Kommunikationspartner die Identität des zweiten Kommunikationspartners verifiziert wird.

Hierdurch ist es erfindungsgemäß vorteilhaft möglich, dass ein noch höheres Maß an Sicherheit bzw. ein höheres Sicherheitsniveau (bzw. eine geringere Fehlerrate) hinsichtlich der Identifizierung des jeweils anderen Kommunikationspartners bzw. des jeweils anderen Verkehrsteilnehmers bzw. Fahrzeug erzielbar ist.

Gemäß einer weiteren Ausführungsform der vorliegenden Erfindung ist es vorgesehen, dass die erste Nachricht und/oder die zweite Nachricht eine Rundsendenachricht, broadcast-Nachricht, ist, wobei die erste und zweite Nachricht insbesondere eine PC5 und/oder Mode 4 Nachricht gemäß dem 3GPP Mobilfunkstandard ist.

Hierdurch ist es erfindungsgemäß in vorteilhafter Weise möglich, dass das Verfahren basierend auf etablierten Kommunikationsstandards bzw. Kommunikationstechniken und insbesondere mit einer hohen Geschwindigkeit bzw. sehr schnell durchführbar ist.

Gemäß einer weiteren Ausführungsform der vorliegenden Erfindung ist es vorgesehen, dass die erste Entfernungsinformation eine Vektorinformation ist bezogen auf den Differenzvektor zwischen einer ersten Position des ersten Kommunikationspartners und einer ersten Position des zweiten Kommunikationspartners zum ersten Zeitpunkt und/oder dass die zweite Entfernungsinformation eine Vektorinformation ist bezogen auf den Differenzvektor zwischen einer zweiten Position des ersten Kommunikationspartners und einer zweiten Position des zweiten Kommunikationspartners zum zweiten Zeitpunkt, wobei insbesondere die erste Nachricht eine erste Geschwindigkeitsinformation des ersten Kommunikationspartners und eine Zeitinformation bezüglich des ersten Zeitpunkts umfasst und/oder insbesondere die zweite Nachricht eine zweite Geschwindigkeitsinformation des zweiten Kommunikationspartners und eine Zeitinformation bezüglich des zweiten Zeitpunkts umfasst. Gemäß einer weiteren Ausführungsform der vorliegenden Erfindung kann die erste bzw. zweite Entfernungsinformation auch im Wesentlichen einer Information hinsichtlich der Position des ersten bzw. zweiten Kommunikationspartners oder einer Information hinsichtlich der Position des ersten Kommunikationspartners und des zweiten Kommunikationspartners (aus Sicht des ersten bzw. zweiten Kommunikationspartners) entsprechen; hieraus ist es dem jeweils anderen Kommunikationspartner wiederum möglich, den Differenzvektor zwischen der ersten Position des ersten Kommunikationspartners und der ersten Position des zweiten Kommunikationspartners zum ersten Zeitpunkt abzuleiten (d.h. dies ist dem zweiten Kommunikationspartner bei der ersten Entfernungsinformation möglich) bzw. möglich, den Differenzvektor zwischen der zweiten Position des ersten Kommunikationspartners und der zweiten Position des zweiten Kommunikationspartners zum zweiten Zeitpunkt (d.h. dies ist dem ersten Kommunikationspartner bei der zweiten Entfernungsinformation möglich).

Hierdurch ist eine noch genauere Positionsbestimmung des jeweils anderen Kommunikationspartners bzw. des jeweils anderen Verkehrsteilnehmers bzw. Fahrzeug erfindungsgemäß möglich.

Gemäß einer weiteren Ausführungsform der vorliegenden Erfindung ist es vorgesehen, dass die weitere erste und die weitere zweite Identitätsinformation jeweils eine Identitätsinformation eines im ersten Kommunikationspartner und im zweiten Kommunikationspartner jeweils eingebauten zu einem Telekommunikationsnetz zugehörigen Telekommunikationsendgeräts sind, welche jeweils Teil einer Öffentliche-Schlüssel-Infrastruktur, PKI, public key infrastructure, sind, wobei dem ersten Kommunikationspartner eine erste private Schlüsselinformation und eine erste Zertifikatsinformation und dem zweiten Kommunikationspartner eine zweite private Schlüsselinformation und eine zweite Zertifikatsinformation zugeordnet ist, wobei die Signaturinformation eine mit der ersten privaten Schlüsselinformation verschlüsselte Information des ersten Kommunikationspartners und die weitere Signaturinformation eine mit der zweiten privaten Schlüsselinformation verschlüsselte Information des zweiten Kommunikationspartners ist.

Hierdurch ist es gemäß einer solchen Ausführungsform der Erfindung vorteilhaft möglich, dass - beruhend auf den in einem Telekommunikationsnetz oder in mehreren Telekommunikationsnetzen vorhandenen Identitäten der den Fahrzeugen bzw. Verkehrsteilnehmern bzw. Kommunikationspartnern zugeordneten Telekommunikationsendgeräten und basierend auf einer realisierten bzw. dort verwendeten Öffentliche-Schlüssel-Infrastruktur, PKI - ein hohes Maß an Sicherheit realisierbar ist.

Gemäß einer weiteren Ausführungsform der vorliegenden Erfindung ist es vorgesehen, dass die erste Nachricht die erste Zertifikatsinformation umfasst und/oder dass die zweite Nachricht die zweite Zertifikatsinformation umfasst,
oder dass die erste Zertifikatsinformation an den zweiten Kommunikationspartner übertragen wird und/oder dass die zweite Zertifikatsinformation an den ersten Kommunikationspartner übertragen wird, insbesondere drahtlos und insbesondere von einer zentralen Stelle und insbesondere auf Anfrage des jeweiligen Kommunikationspartners.

Gemäß einer weiteren Ausführungsform der vorliegenden Erfindung ist es vorgesehen, dass die optisch detektierbare erste und/oder zweite Identitätsinformation dem Informationsinhalt des Fahrzeugkennzeichens entspricht.

Hierdurch ist es erfindungsgemäß in vorteilhafter Weise möglich, dass mit vergleichsweise geringem Aufwand eine Identifizierung anhand optisch detektierbarer Identitätsinformationen möglich ist.

Des Weiteren wird die Aufgabe gelöst durch ein System nach Anspruch 7.

Es ist dadurch gemäß der vorliegenden Erfindung in vorteilhafter Weise möglich, ein zum erfindungsgemäßen Verfahren korrespondierendes erfindungsgemäßes System bereitzustellen, so dass eine Kommunikation mit Broadcast-Nachrichten realisiert werden kann und dennoch eine gesicherte Authentisierung sowie auch bei Bedarf eine vertrauliche Kommunikation mit der Übertragung verschlüsselter Nachrichteninhalten möglich ist.

Die Aufgabe wird ferner gelöst durch einen Kommunikationspartner nach Anspruch 8.

Es ist dadurch gemäß der vorliegenden Erfindung in vorteilhafter Weise möglich, ein zum erfindungsgemäßen Verfahren korrespondierender erfindungsgemäßer Kommunikationspartner bereitzustellen und damit eine Kommunikation mit Broadcast-Nachrichten mit einer gesicherten Authentisierungsmöglichkeit sowie auch bei Bedarf einer vertraulichen Kommunikation mit der Übertragung verschlüsselter Nachrichteninhalten zu realisieren.

Des Weiteren wird die Ausgabe gelöst durch ein Computerprogramm umfassend Befehle, mit deren Hilfe die Schritte eines erfindungsgemäßen Verfahrens durchführbar sind, wenn das Computerprogramm auf einer programmierbaren Einrichtung, insbesondere auf dem ersten Kommunikationspartner oder einer programmierbaren Einrichtung des ersten Kommunikationspartners und/oder auf dem zweiten Kommunikationspartner oder einer programmierbaren Einrichtung des zweiten Kommunikationspartners, ausgeführt wird.

Des Weiteren wird die Aufgabe gelöst durch ein computerlesbares Medium, vorgesehen zur Speicherung eines Computerprogramms, oder Datenträgersignal, vorgesehen zur Übertragung eines Computerprogramms, wobei das computerlesbare Medium oder das Datenträgersignal das erfindungsgemäße Computerprogramm speichert oder überträgt oder wobei das computerlesbare Medium oder das Datenträgersignal den auf einer programmierbaren Einrichtung, insbesondere auf dem ersten Kommunikationspartner oder einer programmierbaren Einrichtung des ersten Kommunikationspartners und/oder auf dem zweiten Kommunikationspartner oder einer programmierbaren Einrichtung des zweiten Kommunikationspartners, speichert oder überträgt.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den wesentlichen Erfindungsgedanken nicht einschränken.

### Kurze Beschreibung der Zeichnungen

- **Figur 1**: zeigt eine schematische Situation zur Veranschaulichung des erfindungsgemäßen Verfahrens zur authentifizierten Kommunikation zwischen einem ersten Kommunikationspartner und einem zweiten Kommunikationspartner, wobei der erste Kommunikationspartner und/oder der zweite Kommunikationspartner ein Verkehrsteilnehmer und/oder Teil einer Verkehrsinfrastruktur ist.
- **Figur 2**: zeigt schematisch ein Ablaufdiagramm für ein erfindungsgemäßes Verfahren zur authentifizierten Kommunikation zwischen dem ersten Kommunikationspartner und dem zweiten Kommunikationspartner.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

Die vorliegende Erfindung wird in Bezug auf bestimmte Ausführungsformen und mit Bezug auf bestimmte Zeichnungen beschrieben, aber die Erfindung ist nicht darauf beschränkt, sondern nur durch die Ansprüche. Die beschriebenen Zeichnungen sind nur schematisch und nicht einschränkend. In den Zeichnungen kann die Größe einiger Elemente übertrieben sein und nicht im Maßstab zur Veranschaulichung gezeichnet werden.

Wenn ein unbestimmter oder ein bestimmter Artikel verwendet wird, wenn auf ein einzelnes Substantiv Bezug genommen wird, z.B. "ein", "eine", "der", "die", "das", schließt dies einen Plural dieses Substantivs ein, sofern nicht ausdrücklich etwas anderes angegeben ist.

Darüber hinaus werden die Begriffe erste, zweite, dritte und dergleichen in der Beschreibung und in den Ansprüchen zur Unterscheidung zwischen ähnlichen Elementen und nicht unbedingt zur Beschreibung einer sequentiellen oder chronologischen Reihenfolge verwendet. Es ist zu verstehen, dass die so verwendeten Begriffe unter geeigneten Umständen austauschbar sind und dass die Ausführungsformen der hierin beschriebenen Erfindung in anderer Abfolge als den hierin beschriebenen oder veranschaulichten funktionieren können.

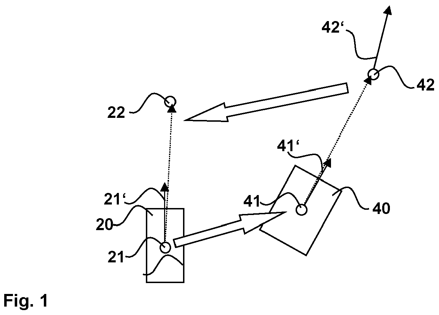

In Figur 1 ist schematisch eine Situation zur Veranschaulichung des erfindungsgemäßen Verfahrens zur authentifizierten Kommunikation zwischen einem ersten Kommunikationspartner 20 und einem zweiten Kommunikationspartner 40 dargestellt, wobei der erste Kommunikationspartner 20 und/oder der zweite Kommunikationspartner 40 ein Verkehrsteilnehmer und/oder Teil einer Verkehrsinfrastruktur ist. Erfindungsgemäß ist somit sowohl der erste Kommunikationspartner 20 als auch der zweite Kommunikationspartner 40 Teil eines Verkehrssystems, wobei insbesondere der zweite Kommunikationspartner 40 (und/oder der erste Kommunikationspartner 20) ein teilautonom oder autonom gesteuertes, sich bewegendes Fahrzeug ist. Alternativ ist der erste und/oder zweite Kommunikationspartner 20, 40 ein stationäres Objekt, etwa als Teil einer Verkehrsinfrastruktur.

Sowohl der erste Kommunikationspartner 20 als auch der zweite Kommunikationspartner 40 weisen potentiell zu unterschiedlichen Zeitpunkten unterschiedliche Positionen auf. Dies ist in Figur 1 für den erste Kommunikationspartner 20 für zwei verschiedene Positionen gezeigt, nämlich eine erste Position 21 des ersten Kommunikationspartners 20 und eine zweite Position 22 des ersten Kommunikationspartners 20. Für den zweiten Kommunikationspartner 40 ist dies ebenfalls für zwei verschiedene Positionen gezeigt, nämlich eine erste Position 41 des zweiten Kommunikationspartners 40 und eine zweite Position 42 des zweiten Kommunikationspartners 40. Der erste Kommunikationspartner 20 weist an seiner ersten Position 21 die erste Geschwindigkeit 21' (des ersten Kommunikationspartners 20) auf (in Figur 1 dargestellt mittels eines durchgezogenen Pfeils). Der zweite Kommunikationspartner 40 weist an seiner ersten Position 41 die erste Geschwindigkeit 41' (des zweiten Kommunikationspartners 40) auf (in Figur 1 ebenfalls dargestellt mittels eines (weiteren) durchgezogenen Pfeils). Ferner weist der zweite Kommunikationspartner 40 an seiner zweiten Position 42 eine zweite Geschwindigkeit 42' (des zweiten Kommunikationspartners 40) auf (in Figur 1 ebenfalls dargestellt mittels eines (weiteren) durchgezogenen Pfeils). Der Einfachheit halber wird im Rahmen der vorliegenden Beschreibung angenommen, dass zum ersten Zeitpunkt sich sowohl der erste Kommunikationspartner 20 als auch der zweiten Kommunikationspartner 40 an ihrer jeweiligen ersten Position (d.h. der erste Kommunikationspartner 20 an seiner ersten Position 21 und der zweite Kommunikationspartner 40 an seiner ersten Position 41) befindet. Ferner wird angenommen, dass zu einem nachfolgenden zweiten Zeitpunkt sich sowohl der erste Kommunikationspartner 20 als auch der zweiten Kommunikationspartner 40 an ihrer jeweiligen zweiten Position (d.h. der erste Kommunikationspartner 20 an seiner zweiten Position 22 und der zweite Kommunikationspartner 40 an seiner zweiten Position 42 (und seine zweite Geschwindigkeit 42' aufweisend)) befindet (an ihrer jeweiligen zweiten Position 22, 42 sind der Einfachheit halber weder der erste Kommunikationspartner 20 noch der zweite Kommunikationspartner 40 nochmals dargestellt bzw. eingezeichnet). Erfindungsgemäß weist der erste Kommunikationspartner 20 neben einer optisch detektierbaren ersten Identitätsinformation eine weitere erste Identitätsinformation auf (oder diese ist dem ersten Kommunikationspartner 20 zugeordnet) und es weist der zweite Kommunikationspartner 40 neben einer optisch detektierbaren zweiten Identitätsinformation eine weitere zweite Identitätsinformation auf (oder diese ist dem zweiten Kommunikationspartner 40 zugeordnet) ist.

Ferner wird erfindungsgemäß zum ersten Zeitpunkt durch den ersten Kommunikationspartner 20 eine erste Entfernungsinformation zum zweiten Kommunikationspartner 40 (insbesondere mittels eines Verfahrens zur Positionsdifferenzenermittlung zwischen dem ersten Kommunikationspartner 20 und dem zweiten Kommunikationspartner 40) bestimmt oder erfasst (dies ist in Figur 1 mittels eines weißen, mit durchgezogener Linie umrandeten Pfeils dargestellt, der vom ersten Kommunikationspartner 20 zum zweiten Kommunikationspartner 40 weist) sowie die optisch detektierbare zweite Identitätsinformation des zweiten Kommunikationspartners 40 bestimmt oder erfasst. Ferner wird eine erste Nachricht drahtlos ausgesendet, wobei die erste Nachricht die erste Entfernungsinformation, die optisch detektierbare zweite Identitätsinformation des zweiten Kommunikationspartners 40, die optisch detektierbare erste Identitätsinformation und die weitere erste Identitätsinformation des ersten Kommunikationspartners 20 sowie eine Signaturinformation des ersten Kommunikationspartners 20 umfasst. Die erste Nachricht wird erfindungsgemäß durch den zweiten Kommunikationspartner 40 empfangen und als Teil der ersten Nachricht die optisch detektierbare zweite Identitätsinformation des zweiten Kommunikationspartners 40 detektiert oder erfasst sowie die Signaturinformation durch den zweiten Kommunikationspartner 40 verifiziert. Weiterhin wird erfindungsgemäß zu einem zweiten Zeitpunkt durch den zweiten Kommunikationspartner 40 eine zweite Entfernungsinformation zum ersten Kommunikationspartner 20 bestimmt oder erfasst (dies ist in Figur 1 mittels eines weiteren weißen, mit durchgezogener Linie umrandeten Pfeils dargestellt, der vom zweiten Kommunikationspartner 40 zum ersten Kommunikationspartner 20 weist) und die optisch detektierbare erste Identitätsinformation des ersten Kommunikationspartners 20 bestimmt oder erfasst und es wird eine zweite Nachricht drahtlos ausgesendet, wobei die zweite Nachricht die zweite Entfernungsinformation, die optisch detektierbare erste Identitätsinformation und/oder die weitere erste Identitätsinformation des ersten Kommunikationspartners 20, die optisch detektierbare zweite Identitätsinformation und die weitere zweite Identitätsinformation des zweiten Kommunikationspartners 40 sowie eine weitere Signaturinformation des zweiten Kommunikationspartners 40 umfasst. Die zweite Nachricht wird erfindungsgemäß durch den ersten Kommunikationspartner 20 empfangen und die weitere Signaturinformation durch den ersten Kommunikationspartner 20 verifiziert.

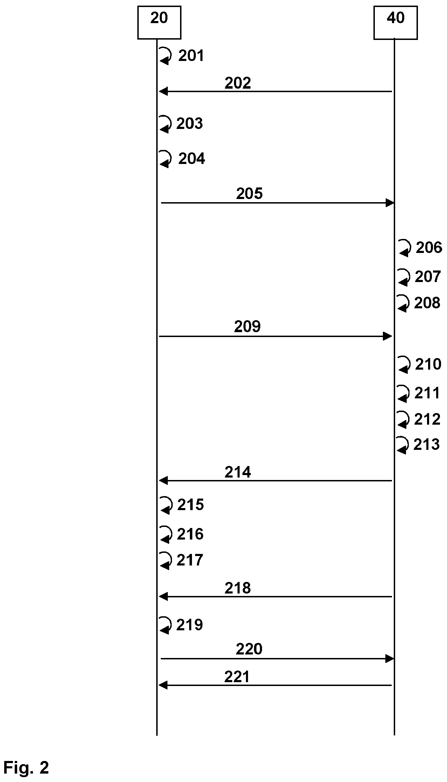

In Figur 2 ist schematisch und exemplarisch ein Ablaufdiagramm für ein erfindungsgemäßes Verfahren zur authentifizierten Kommunikation zwischen dem ersten Kommunikationspartner und dem zweiten Kommunikationspartner dargestellt.

In einem ersten bis fünften Prozessschritt 201, 202, 203, 204, 205 findet zunächst die Kommunikationsaufnahme durch den ersten Kommunikationspartner 20 (und insbesondere zum ersten Zeitpunkt) statt. Im ersten Prozessschritt 201 wird (im ersten Kommunikationspartner 20 bzw. durch den ersten Kommunikationspartner 20, welcher nachfolgend auch vereinfachend als das erste Fahrzeug 20 bzw. auch als "A-FZG" bezeichnet wird) ein Trigger für eine Kommunikation mit einem in der optischen Nähe befindlichen zweiten Kommunikationspartner 40 (welcher nachfolgend auch vereinfachend als das zweite Fahrzeug 40 bzw. auch als "B-FZG" bezeichnet wird) gesetzt oder dieser findet statt. Im zweiten Prozessschritt 202 werden (insbesondere elektrooptisch und zum ersten Zeitpunkt) die erste Entfernungsinformation (zum zweiten Kommunikationspartner 40) und die optisch detektierbare zweite Identitätsinformation des zweiten Kommunikationspartners 40 (nachfolgend auch als B-OID bezeichnet) bestimmt oder erfasst (d.h. das A-FZG erfasst insbesondere elektrooptisch B-FZG (B-OID) zum Zweck einer schnellen und sicheren Kommunikation mit dem B-FZG und berechnet den relativen Positionsvektor von A-FZG zu B-FZG zum ersten Zeitpunkt (vec_AB(t₁)), insbesondere bezogen auf "Mittelpunkte" von B-FZG und A-FZG oder aber bezogen auf im ITS (Intelligentes Transportsystem) vordefinierter Positionspunkte). Im dritten Prozessschritt 203 wird die erste Nachricht generiert bzw. zusammengestellt, wobei die erste Nachricht die erste Entfernungsinformation, die optisch detektierbare zweite Identitätsinformation des zweiten Kommunikationspartners 40 (B-OID), die optisch detektierbare erste Identitätsinformation (nachfolgend auch als A-OID bezeichnet) und die weitere erste Identitätsinformation des ersten Kommunikationspartners 20 (nachfolgend auch als A-MID bezeichnet) umfasst. Im in Figur 2 dargestellten Ausführungsbeispiel - und somit gemäß einer bevorzugten Ausführung der vorliegenden Erfindung - weist die erste Nachricht ferner einen Nachrichteninhalt bzw. einen Code bzw. eine Codeinformation auf, d.h. insbesondere eine Information, beispielsweise in Form eines Befehls oder einer sonstigen Bedeutung, welcher vom ersten Kommunikationspartner 20 zum zweiten Kommunikationspartner 40 übertragen werden soll. Insbesondere weist die erste Nachricht ferner auch eine (dem ersten Kommunikationspartner 20 zugeordnete) Zertifikatsinformation - nachfolgend als erste Zertifikatsinformation bzw. auch als A-Cert bezeichnet - auf. Im vierten Prozessschritt 204 wird eine Signaturinformation des ersten Kommunikationspartners 20 berechnet, insbesondere bezüglich der oder in Abhängigkeit der ersten Nachricht, welche nachfolgend auch als MSG bezeicnnet wird. Die Signaturinformation wird nachfolgend insbesondere auch als A-Sign(MSG) bezeichnet. Im fünften Prozessschritt 205 wird die erste Nachricht, d.h. umfassend die erste Entfernungsinformation, die optisch detektierbare zweite Identitätsinformation des zweiten Kommunikationspartners 40, die optisch detektierbare erste Identitätsinformation, die weitere erste Identitätsinformation des ersten Kommunikationspartners 20, den Nachrichteninhalt bzw. den Code, die Zertifikatsinformation und die Signaturinformation ausgesendet (insbesondere als Broadcast Message (Rundsendenachricht) und insbesondere über V2V (vehicle to vehicle, Fahrzeug zu Fahrzeug) PC5 Interface (d.h. unter anderem auf an das B-FZG)). Damit ist der erste Schritt des erfindungsgemäßen Verfahrens abgeschlossen.

In einem sechsten bis viertzehnten Prozessschritt 206, 207, 208, 209, 210, 211, 212, 213, 214 wird der erste Kommunikationspartner 20 (bzw. das AFZG) durch den zweiten Kommunikationspartner 40 (bzw. das BFZG) - insbesondere zum zweiten Zeitpunkt - authentisiert, was im Wesentlichen dem zweiten Schritt des erfindungsgemäßen Verfahrens entspricht, und es wird - entsprechend einem ersten Teil des dritten Schritts - die Antwortnachricht (zweite Nachricht) vorbereitet und ausgesandt (d.h. es findet eine Kommunikation in Gegenrichtung, d.h. vom zweiten Kommunikationspartner 40 zum ersten Kommunikationspartner 20, insbesondere zum zweiten Zeitpunkt, statt):
Zunächst wird die erste Nachricht (welche erfindungsgemäß insbesondere als eine Rundsendenachricht (broadcast-Nachricht) vom ersten Kommunikationspartner 20 ausgesandt wurde) vom zweiten Kommunikationspartner 40 empfangen. In einem sechsten Prozessschritt 206 wird durch den zweiten Kommunikationspartner 40 erkannt, dass die erste Nachricht für ihn selbst, d.h. für das BFZG, bestimmt ist bzw. dass der zweite Kommunikationspartner 40 der (vom ersten Kommunikationspartner 20) intendierte Adressat ist bzw. offenbar zu sein scheint; diese Erkennung wird erfindungsgemäß anhand der Identifizierung der optisch detektierbaren zweiten Identitätsinformation B-OID des zweiten Kommunikationspartners 40 (als Teil der ersten Nachricht) durch den zweiten Kommunikationspartner 40 (B-FZG) durchgeführt. Im siebten Prozessschritt 207 wird durch den zweiten Kommunikationspartner 40 verifiziert, dass die Nachricht vom ersten Kommunikationspartner 20 ist, d.h. vom AFZG mit seiner ersten optisch detektierbaren Identitätsinformation A-OID und der weiteren ersten Identitätsinformation A-MID. Diese Überprüfung wird insbesondere anhand einer Verifizierung der ersten Zertifikatsinformation (A-Cert, ebenfalls als Teil der ersten Nachricht) anhand einer lokal im zweiten Kommunikationspartner 40 gespeicherten Information bzw. einer Datenbank (mit insbesondere einer Zuordnung zwischen der Zertifikatsinformation, der optisch detektierbaren Identitätsinformation und/oder der weiteren Identitätsinformation des jeweiligen Kommunikationspartners, nachfolgend auch als CA Cert bezeichnet) vorgenommen; nachfolgend kann somit (im B-FZG) nicht nur erkannt bzw. verifiziert werden, dass die erste Nachricht für den zweiten Kommunikationspartner 40 bestimmt ist, sondern auch, dass sie vom ersten Kommunikationspartner 20 ausgesandt wurde bzw. ausgesandt zu sein scheint (weil die empfangene erste optisch detektierbare Identitätsinformation A-OID und die weitere erste Identitätsinformation A-MID sich (bezüglich des A-FZG) entsprechen). In einem achten Prozessschritt 208 wird durch den zweiten Kommunikationspartner 40 verifiziert oder überprüft, dass die Signaturinformation A-Sign(MSG) korrekt ist. Für den bevorzugten Fall, dass eine Öffentliche-Schlüssel-Infrastruktur, PKI (public key infrastructure) verwendet wird, ist dem ersten Kommunikationspartner 20 eine erste private Schlüsselinformation und eine erste Zertifikatsinformation (und dem zweiten Kommunikationspartner 40 eine zweite private Schlüsselinformation und eine zweite Zertifikatsinformation) zugeordnet. Die Signaturinformation A-Sign bzw. A-Sign(MSG) ist eine mit der ersten privaten Schlüsselinformation verschlüsselte Information des ersten Kommunikationspartners 20, welche anhand der ersten Zertifikatsinformation (A-Cert des ersten Kommunikationspartners 20) verifizierbar oder überprüfbar ist. Sofern diese Überprüfung erfolgreich ist, kann durch den zweiten Kommunikationspartner 40 sichergestellt bzw. überprüft werden, dass tatsächlich die erste Nachricht vom ersten Kommunikationspartner 20 stammt, d.h. dieser wurde somit authentifiziert. Im neunten Prozessschritt 209 werden (insbesondere elektrooptisch und zum zweiten Zeitpunkt) die zweite Entfernungsinformation (zum ersten Kommunikationspartner 20) und die optisch detektierbare erste Identitätsinformation des ersten Kommunikationspartners 20 (A-OID) bestimmt oder erfasst (d.h. das B-FZG erfasst insbesondere elektrooptisch A-FZG (A-OID), insbesondere basierend auf der Information der zuvor empfangenen ersten Entfernungsinformation, d.h. das B-FZG "schaut" in Richtung des inversen des als erste Entfernungsinformation empfangenen Vektors vec_AB(t₁)). Ferner wird im neunten Prozessschritt 209 die zweite Entfernungsinformation zum ersten Kommunikationspartner (20) bestimmt oder erfasst (d.h. es wird der Positionsvektor zum A-FZG, vec_BA(t₂), erfasst bzw. berechnet, d.h. den relativen Positionsvektor von B-FZG zum A-FZG zum zweiten Zeitpunkt, vec_BA(t₂), wiederum insbesondere bezogen auf "Mittelpunkte" von B-FZG und A-FZG oder aber bezogen auf im ITS (Intelligentes Transportsystem) vordefinierter Positionspunkte). Im zehnten Prozessschritt 210 wird der Vektor delta_vec = vec_BA(t₂) + vec_AB(t₁) (Differenzvektor) berechnet, welcher letztlich der Differenz der Positionsvektoren zwischen den Kommunikationspartnern 20, 40 zum ersten bzw. zweiten Zeitpunkt entspricht. Erfindungsgemäß wird insbesondere überprüft, ob dieser Differenzvektor delta_vec kleiner ist als ein vorgegebener akzeptabler oder akzeptierter Wert, insbesondere ein Wert in Abhängigkeit der Zeitdifferenz t₂ - t₁ zwischen dem ersten und zweiten Zeitpunkt oder eine Funktion dieser Zeitdifferenz: FKT(t₂-t₁), wobei FKT(delta_t) = Funktion für akzeptable Differenz der Hin-/Rückvektordifferenz möglich in der Zeit t₂-t₁. Hierdurch ist es erfindungsgemäß möglich, dass über den Abgleich der relativen Positionsvektoren durch den zweiten Kommunikationspartner 40, d.h. B-FZG, verifiziert wird, dass die erste Nachricht sicher bzw. authentisiert vom A-FZG (mit A-OID und A-MID) kommt; der zweite Kommunikationspartner 40 ist jetzt in der Lage Nachrichteninhalte mit A-pubKey zu verschlüsseln.
Bei dieser Überprüfung im zehnten Prozessschritt 210 ist insbesondere vorgesehen, dass auch die unterschiedlichen Geschwindigkeiten des ersten und zweiten Kommunikationspartners 20, 40 bzw. des A-FZG und B-FZG, va, und v_{B} zum ersten bzw. zweiten Zeitpunkt (d.h. t₁ und t₂) bei dem vorgegebenen akzeptablen Wert berücksichtigt werden, d.h. dass dieser Wert nicht nur eine Funktion der Zeitdifferenz sondern auch dieser Geschwindigkeiten ist: FKT(t₂-t₁, v_{A(t1)},v_{B(t2)}. Für kleinere Geschwindigkeiten bzw. kleinere Geschwindigkeitsdifferenzen könnte dann auch der tolerierte Differenzvektor delta_vec kleiner sein und somit die Authentifizierung noch sicherer; Voraussetzung ist jedoch, dass die erste Nachricht eine erste Geschwindigkeitsinformation des ersten Kommunikationspartners und eine Zeitinformation bezüglich des ersten Zeitpunkts umfasst, d.h. auch die Geschwindigkeit v_{A(t1)} und der Zeitpunkt t₁ an B-FZG übertragen werden. Im elften Prozessschritt 211 können Nachrichteninhalte mit A-pubKey als Teil der zweiten Nachricht verschlüsselt werden.
Im elften bis vierzehnten Prozessschritt 211, 212, 213, 214 findet mit der Übertragung der zweiten Nachricht vom B-FZG zum A-FZG eine Kommunikation in Gegenrichtung (bezüglich der ersten Nachricht), d.h. vom zweiten Kommunikationspartner 40 zum ersten Kommunikationspartner 20, statt. Im elften Prozessschritt 211 wird optional zunächst ein Nutzinhalt bzw. ein Nachrichteninhalt (bzw. ein Code bzw. eine Codeinformation, d.h. insbesondere eine Information, beispielsweise in Form eines Befehls oder einer sonstigen Bedeutung, welcher vom zweiten Kommunikationspartner 40 zum ersten Kommunikationspartner 20 übertragen werden soll) vom B-FZG verschlüsselt; diese Verschlüsselung wird unter Verwendung der (mittels der ersten Nachricht zum zweiten Kommunikationspartner 40 übertragenen) erste Zertifikatsinformation (A-Cert, d.h. dem öffentlichen Schlüssel des ersten Kommunikationspartners 20) durchgeführt, so dass sichergestellt ist, dass lediglich mit Kenntnis des zugehörigen privaten Schlüssels dieser Nachrichteninhalt zugänglich ist. Diese verschlüsselte Nachrichteninhalt ist dann Teil der zweiten Nachricht. Im zwölften Prozessschritt 212 wird die zweite Nachricht generiert bzw. zusammengestellt, wobei die zweite Nachricht die zweite Entfernungsinformation, die optisch detektierbare erste Identitätsinformation des ersten Kommunikationspartners 20 (A-OID), die optisch detektierbare zweite Identitätsinformation (B-OID), die weitere zweite Identitätsinformation des zweiten Kommunikationspartners 40 (nachfolgend auch als B-MID bezeichnet) und ggf. den verschlüsselten Nachrichteninhalt umfasst. Im in Figur 2 dargestellten Ausführungsbeispiel - und somit gemäß einer bevorzugten Ausführung der vorliegenden Erfindung - weist die zweite Nachricht ferner den Nachrichteninhalt bzw. Nutzinhalt (Code bzw. Codeinformation) auf, insbesondere in mit dem A-Cert bzw. dem A-pubKey verschlüsselter Form. Insbesondere weist die zweite Nachricht ferner auch eine (dem zweiten Kommunikationspartner 40 zugeordnete) Zertifikatsinformation - nachfolgend als zweite Zertifikatsinformation bzw. auch als B-Cert bezeichnet - auf. Im nachfolgenden dreizehnten Prozessschritt 213 wird eine weitere Signaturinformation des zweiten Kommunikationspartners 40 berechnet, insbesondere bezüglich der oder in Abhängigkeit der zweiten Nachricht, welche nachfolgend auch wiederum als weitere MSG bezeichnet wird. Die weitere Signaturinformation wird nachfolgend insbesondere auch als B-Sign(weitere MSG) bezeichnet. Im vierzehnten Prozessschritt 214 wird die zweite Nachricht, d.h. umfassend die zweite Entfernungsinformation, die optisch detektierbare erste Identitätsinformation des ersten Kommunikationspartners 20, die optisch detektierbare zweite Identitätsinformation des zweiten Kommunikationspartners 40, die weitere zweite Identitätsinformation des zweiten Kommunikationspartners 40, den Nachrichteninhalt bzw. den Code (insbesondere in verschlüsselter Form), die zweite Zertifikatsinformation und die weitere Signaturinformation ausgesendet (insbesondere ebenfalls als Broadcast Message (Rundsendenachricht) und insbesondere über V2V (vehicle to vehicle, Fahrzeug zu Fahrzeug) PC5 Interface (d.h. unter anderem auf an das B-FZG)).

In einem fünfzehnten bis neunzehnten Prozessschritt 215, 216, 217, 218, 219 wird der zweite Kommunikationspartner 40 (bzw. das B-FZG) durch den ersten Kommunikationspartner 20 (bzw. das A-FZG) authentisiert, was dem letzten Teil des dritten Schritts des erfindungsgemäßen Verfahrens entspricht: Zunächst wird die zweite Nachricht (welche erfindungsgemäß insbesondere ebenfalls als eine Rundsendenachricht (broadcast-Nachricht) vom zweiten Kommunikationspartner 40 ausgesandt wurde) vom ersten Kommunikationspartner 20 empfangen. In einem fünfzehnten Prozessschritt 215 wird durch den ersten Kommunikationspartner 20 erkannt, dass die zweite Nachricht für ihn selbst, d.h. für das A-FZG, bestimmt ist bzw. dass der erste Kommunikationspartner 20 der (vom zweiten Kommunikationspartner 40) intendierte Adressat ist bzw. offenbar zu sein scheint; diese Erkennung wird erfindungsgemäß anhand der Identifizierung der optisch detektierbaren ersten Identitätsinformation A-OID und der weiteren ersten Identitätsinformation A-MID des ersten Kommunikationspartners 20 (als Teil der zweiten Nachricht) durch den ersten Kommunikationspartner 20 (A-FZG) durchgeführt. Im sechzehnten Prozessschritt 216 wird durch den ersten Kommunikationspartner 20 verifiziert, dass die zweite Nachricht vom zweiten Kommunikationspartner 40 ist, d.h. vom B-FZG mit seiner zweiten optisch detektierbaren Identitätsinformation B-OID und der weiteren zweiten Identitätsinformation B-MID. Diese Überprüfung wird insbesondere anhand einer Verifizierung der zweiten Zertifikatsinformation (B-Cert, ebenfalls als Teil der zweiten Nachricht) anhand einer lokal im ersten Kommunikationspartner 20 gespeicherten Information bzw. einer Datenbank (mit insbesondere einer Zuordnung zwischen der Zertifikatsinformation, der optisch detektierbaren Identitätsinformation und/oder der weiteren Identitätsinformation des jeweiligen Kommunikationspartners, CA Cert) vorgenommen; nachfolgend kann somit (im A-FZG) nicht nur erkannt bzw. verifiziert werden, dass die zweite Nachricht für den ersten Kommunikationspartner 20 bestimmt ist, sondern auch, dass sie vom zweiten Kommunikationspartner 40 ausgesandt wurde bzw. ausgesandt zu sein scheint (weil die empfangene zweite optisch detektierbare Identitätsinformation B-OID und die weitere zweite Identitätsinformation B-MID sich (bezüglich des B-FZG) entsprechen). In einem siebzehnten Prozessschritt 217 wird durch den ersten Kommunikationspartner 20 verifiziert oder überprüft, dass die Signaturinformation B-Sign(weiterer MSG) korrekt ist. Für den bevorzugten Fall, dass eine Öffentliche-Schlüssel-Infrastruktur, PKI (public key infrastructure) verwendet wird, ist (wie bereits erwähnt) dem zweiten Kommunikationspartner 40 die zweite private Schlüsselinformation und die zweite Zertifikatsinformation zugeordnet. Die Signaturinformation B-Sign bzw. B-Sign(weiterer MSG) ist eine mit der zweiten privaten Schlüsselinformation verschlüsselte Information des zweiten Kommunikationspartners 40, welche anhand der zweiten Zertifikatsinformation (B-Cert des zweiten Kommunikationspartners 40) verifizierbar oder überprüfbar ist. Sofern diese Überprüfung erfolgreich ist, kann durch den ersten Kommunikationspartner 20 sichergestellt bzw. überprüft werden, dass tatsächlich die zweite Nachricht vom zweiten Kommunikationspartner stammt, d.h. dieser wurde somit authentifiziert. Da im CA Cert die Verbindung von B-OID und B-MID gegeben ist, ist sichergestellt, dass nur das B-FZG diese (zweite) Nachricht signieren konnte. Umgekehrt (da im CA Cert die Verbindung von A-OID und A-MID gegeben ist) ist bei Verwendung des A-Cert bzw. des A-pubKey bei einer Verschlüsselungsoperation (durch das B-FZG) sichergestellt, dass ggf. nur das A-FZG den verschlüsselten Nachrichteninhalt in der zweiten Nachricht entschlüsseln kann. Nur A-FZG kann den mit A-pubKey (aus A-Cert) den verschlüsselten Nachrichteninhalt entschlüsseln, da nur A-FZG in Kenntnis der dazu notwendigen privaten Schlüsselinformation (A-privKey) ist.
Zur weitergehenden Überprüfung auch anhand der Position des zweiten Kommunikationspartners 40, wird im achtzehnten Prozessschritt 218 (insbesondere elektrooptisch und zu einem dritten Zeitpunkt ts) eine dritte Entfernungsinformation (zwischen dem ersten Kommunikationspartner 20 und dem zweiten Kommunikationspartner 40; d.h. es wird der Positionsvektor zum B-FZG, vec_AB(t₃), erfasst bzw. berechnet, d.h. den relativen Positionsvektor von A-FZG zum B-FZG zum dritten Zeitpunkt, vec_AB(t₃), wiederum insbesondere bezogen auf "Mittelpunkte" von A-FZG und B-FZG oder aber bezogen auf im ITS (Intelligentes Transportsystem) vordefinierter Positionspunkte) und die optisch detektierbare zweite Identitätsinformation des zweiten Kommunikationspartners 40 (B-OID) vom ersten Kommunikationspartner 20 bestimmt oder erfasst (d.h. das A-FZG erfasst insbesondere elektrooptisch B-OID). Ferner wird im neunzehnten Prozessschritt 219 die Identität des B-FZG über dessen Position verifiziert, indem der Vektor delta_vec_{A-FZG-B-FZG} = vec_BA(t₂) + vec_AB(t₃) (Differenzvektor) berechnet wird, welcher letztlich der Differenz der Positionsvektoren zwischen den Kommunikationspartnern 20, 40 zum zweiten bzw. dritten Zeitpunkt entspricht. Erfindungsgemäß wird insbesondere überprüft, ob dieser Differenzvektor delta_vec kleiner ist als ein vorgegebener weiterer akzeptabler oder akzeptierter Wert, insbesondere ein weiterer Wert in Abhängigkeit der Zeitdifferenz t₃ - t₂ zwischen dem zweiten und dritten Zeitpunkt oder eine weitere Funktion dieser Zeitdifferenz: weitere FKT(t₃-t₂), wobei weitere FKT(t₃-t₂) = weitere Funktion für akzeptable Differenz der Hin-/Rückvektordifferenz möglich in der Zeit t₃-t₂. Hierdurch ist es erfindungsgemäß möglich, dass über den Abgleich der relativen Positionsvektoren durch den ersten Kommunikationspartner 20, d.h. A-FZG, verifiziert wird, dass die zweite Nachricht sicher bzw. authentisiert vom B-FZG (mit B-OID und B-MID) kommt. Somit ist sichergestellt, dass über den Abgleich der relativen Positionsvektoren verifiziert wird, dass die vom A-FZG empfangene zweite Nachricht sicher vom B-FZG mit B-OID und B-MID kommt. Damit ist eine sichere und authentisierte Kommunikation zwischen A-FZG und B-FZG, also von A-FZG an B-FZG oder von B-FZG an A-FZG initiiert. Der erste Kommunikationspartner 20 ist jetzt in der Lage während der weiteren Kommunikation mit B-FZG Nachrichteninhalte mit B-pubKey zu verschlüsseln. Somit können in der weitere Kommunikation A-FZG und B-FZG, die sich gegenseitig sicher authentisiert haben, verschlüsselte Nachrichteninhalten austauschen.

Erfindungsgemäß ist es optional insbesondere vorgesehen, dass im Ablauf nach lediglich zwei Broadcast Nachrichten (d.h. nach der ersten Nachricht und der zweiten Nachricht) die Kommunikation zwischen dem A-FZG und dem B-FZG bereits beendet ist. Ein Beispiel für eine Situation, in der dies sinnvoll und vorteilhaft ist, bezieht sich insbesondere auf den Spezialfall "Extrem schnelles Pollen"; hierbei sieht bzw. erkennt das A-FZG das B-FZG und möchte bzw. ist daran interessiert, vom B-FZG sehr schnell eine Nachricht bzw. eine Information zu einer vorgegebenen textuellen oder xyzkodierten Frage (welche ggf. auch vom B-FZG selbst bestimmbar ist) zu erhalten, wobei lediglich das A-FZG von B-FZG gesendete, verschlüsselte Nachrichteninhalte entschlüsseln kann; ein Beispiel dieser Art, d.h. einer Situation "Extrem schnelles Pollen", liegt etwa vor, wenn das A-FZG vom B-FZG wissen will, wohin (d.h. in welche Richtung) das B-FZG in einem aktuell vorliegenden Konfliktfall ausweichen wird.

Falls dieser Spezialfall nicht vorliegt, ist es erfindungsgemäß insbesondere bevorzugt vorgesehen, dass im Ablauf nach zwei Broadcast Nachrichten (d.h. nach der ersten Nachricht und der zweiten Nachricht) die Kommunikation zwischen dem A-FZG und dem B-FZG nicht bereits beendet ist, sondern fortgesetzt wird. Falls dieser Fall vorliegt, ist es möglich, dass in weiteren Prozessschritten eine sichere und authentisierte Kommunikation zwischen dem ersten Kommunikationspartner 20 und dem zweiten Kommunikationspartner 40 (d.h. dem A-FZG und dem B-FZG) stattfindet. Beispielhaft ist im Folgenden eine solche Kommunikation in beide Richtungen mittels einer dritten und einer vierten Nachricht erwähnt, es ist jedoch erfindungsgemäß gemäß weiterer Varianten möglich, dass lediglich eine der der dritten und vierten Nachricht gesendet wird oder dass über die dritte und/oder vierte Nachricht hinaus noch weitere Nachrichten zwischen dem ersten und zweiten Kommunikationspartner 20, 40 ausgetauscht werden. Im zwanzigsten und einundzwanzigsten Prozessschritt 220, 221 wird somit beispielhaft die Ausführungsform bzw. -variante der Erfindung dargestellt, bei der in Form der dritten und vierten Nachricht die sichere und authentisierte Kommunikation zwischen dem ersten Kommunikationspartner 20 und dem zweiten Kommunikationspartner 40 (d.h. dem A-FZG und dem B-FZG) fortgesetzt wird: Im zwanzigsten Prozessschritt 220 sendet der erste Kommunikationspartner 20 die dritte Nachricht (ebenfalls insbesondere in Form einer Broadcast-Nachricht), welche (auch) vom zweiten Kommunikationspartner 40 empfangen wird bzw. empfangbar ist und im einundzwanzigsten Prozessschritt 221 sendet der zweite Kommunikationspartner 40 die vierte Nachricht (ebenfalls insbesondere in Form einer Broadcast-Nachricht), welche (auch) vom ersten Kommunikationspartner 20 empfangen wird bzw. empfangbar ist. Die dritte Nachricht umfasst insbesondere die optisch detektierbare zweite Identitätsinformation (B-OID) und/oder die weitere zweite Identitätsinformation (B-MID) des zweiten Kommunikationspartners 40, die optisch detektierbare erste Identitätsinformation (A-OID) und/oder die weitere erste Identitätsinformation (A-MID) des ersten Kommunikationspartners 20, der mit der zweiten Zertifikatsinformation (B-Cert, d.h. dem öffentlichen Schlüssel) des zweiten Kommunikationspartners 40 verschlüsselte Nachrichteninhalte (bzw. die Codeinformation bzw. der Code bzw. der Befehl der dritten Nachricht), sowie die Signaturinformation (A-Sign) des ersten Kommunikationspartners 20. Die vierte Nachricht umfasst insbesondere die optisch detektierbare erste Identitätsinformation (A-OID) und/oder die weitere erste Identitätsinformation (A-MID) des ersten Kommunikationspartners 20, die optisch detektierbare zweite Identitätsinformation (B-OID) und/oder die weitere zweite Identitätsinformation (B-MID) des zweiten Kommunikationspartners 40, der mit der ersten Zertifikatsinformation (A-Cert, d.h. dem öffentlichen Schlüssel) des ersten Kommunikationspartners 20 verschlüsselte Nachrichteninhalte (bzw. die Codeinformation bzw. der Code bzw. der Befehl der vierten Nachricht), sowie die weitere Signaturinformation (B-Sign) des zweiten Kommunikationspartners 40.

Erfindungsgemäß ist es vorteilhaft möglich, dass eine schnelle und gesicherte Authentisierung und Kommunikation für eine V2V (vehicle to vehicle) Mobilfunkkommunikation direkt (d.h. ohne die Beteiligung einer zentralen Instanz oder des Mobilfunknetzes) über "PC5 Mode 4 / PC5-Sidelink" Broadcast-Nachrichten mit Hilfe einer elektrooptischen Verifikation realisierbar ist.

Die direkte V2V Kommunikation, insbesondere die V2V Mobilfunkkommunikation über die PC5-Schnittstelle (Mode 4 ohne Nutzung des Mobilfunknetzes), ermöglicht die sehr schnelle Übertragung von Nachrichten, die für viele Anwendungsfälle, z.B. Gefahrenmeldungen, sehr wichtig ist. Wie viel schneller als die übliche P2P Kommunikation innerhalb eines Mobilfunknetzes (d.h. mit der Beteiligung einer zentralen Instanz bzw. des Mobilfunknetzes) diese V2V Kommunikation tatsächlich ist, hängt von der Netzausprägung, der verwendete Standard des Mobilfunkkommunikationsnetzes, z.B. 5G, und dessen Implementierung ab. Da bei der V2V Kommunikation kein Mobilfunknetz benutzt wird, ist inhärent zunächst keine Möglichkeit der Identitätsprüfung und -bestätigung durch eine zentrale Instanz wie Mobilfunkoperatoren (MNO) vorgesehen, so dass bei dieser V2V Kommunikation mit Broadcast-Nachrichten seine gesicherte Authentisierung und bei Bedarf auch vertrauliche/verschlüsselte Kommunikation zwischen zwei Fahrzeugen zunächst nicht realisierbar erscheint. Erfindungsgemäß wird jedoch eine Lösung für sowohl eine gesicherte Authentisierung und auch für die Möglichkeit einer vertraulichen bzw. verschlüsselten Kommunikation gegeben, indem erfindungsgemäß insbesondere wie folgt vorgegangen wird: Wenn Fahrzeug A (A-FZG) mit Fahrzeug B (B-FZG) kommunizieren will, bestimmt Fahrzeug A die elektrooptisch erfassbare Identität (OID) vom Fahrzeug B (B-OID), mit welchem A kommunizieren möchte. In einer Broadcast-Nachricht sendet dann A die eigene elektrooptisch erfassbare Identität A-OID sowie A-MID, d.h. seine Identität im Mobilfunknetz (bzw. mobile Identität MID, z.B. MSISDN), zusammen mit dem Inhalt der Nachricht und seiner Position bzw. der Position von Fahrzeug B zum ersten Zeitpunkt. B erkennt durch die gesendete B-OID, dass Fahrzeug A (A-OID) mit ihm kommunizieren möchte, und kann elektrooptisch überprüfen (Erfassung von A-OID), ob A sich wirklich an der angegebenen Position befindet und eine V2V-Kommunikation (basierend auf den MIDs, A-MID und B-MID) möglich und sinnvoll ist. Wenn dies der Fall ist, kann B erfindungsgemäß eine entsprechende Nachricht an A senden, indem B eine Broadcast-Nachricht sendet mit A-OID/A-MID (Adressat), B-OID und B-MID, dem Inhalt der Nachricht sowie seiner Position bzw. der Position von Fahrzeug A zum zweiten Zeitpunkt. A erkennt, dass die Nachricht/Antwort von B ist, und überprüft die Position von B (zum dritten Zeitpunkt) mit der selbst erfassten und kennt damit die B-MID zu der B-OID. Nun kennen A und B die MID des gewünschten Kommunikationspartners. Die Durchführung des Verfahrens lediglich mit dieser Art der örtlichen Überprüfung hängt weitgehend von der Möglichkeit zu möglichst genauen Lokalisierung der jeweiligen Kommunikationspartner ab; eine sichere Verifizierung der jeweiligen Identitäten der Fahrzeuge A und B im Mobilfunknetz ist hierdurch noch nicht möglich. Dies bedeutet, dass A und B sich gegenseitig noch nicht authentisiert haben: Ein Fahrzeug C könnte sich als Fahrzeug A ausgeben, indem C eine Broadcast-Nachricht (auch) an Fahrzeug B (B-OID) adressiert und dabei im Inhalt der Nachricht sich mit der Identität A-OID (und entsprechend der Position von A) ausgibt (diese kann C ermitteln, sofern C sich auch in elektrooptischer "Nähe" von A und B befindet); als MID sendet C aber seine eigene Mobilfunkidentität C-MID mit. B überprüft die, ob sich an der angegebenen Position das Fahrzeug mit der A-OID befindet; B muss jetzt annehmen, dass C-MID zu A-OID gehört; damit hätte C sich erfolgreich als A ausgegeben. Dies ist problematisch für Anwendungsfälle, die eine sehr schnelle Kommunikation erfordern und der Empfänger der Nachricht die Identität des Senders verifizieren muss, z.B. weil eine gesicherte Kommunikation zwischen Sender und Empfänger notwendig ist und diese gesicherte Kommunikation für den Sender nur mit Kenntnis der o.g. wahren Identität des Empfängers möglich ist. Erfindungsgemäß ist es daher vorgesehen, dass zwei Fahrzeuge mit registrierter Identität im Mobilfunknetz (Mobile Identität MID, z.B. MSISDN) und elektrooptisch erfassbarer Identität (Optische Identität OID, z.B. Kennzeichen) sich - über die rein örtliche Überprüfung hinaus - schnell (direkt (V2V Mobilfunkkommunikation PC5 Mode 4, d.h. insbesondere ohne Einbindung einer (zentralen) Instanz (wie MNO oder CA) oder des Mobilfunknetzes) sicher authentisieren und dann kommunizieren können, wobei durch elektrooptische Erfassung der OIDs und darauf basierender genauer gegenseitiger Positionsbestimmung/-berechnung die jeweils vorgegebene MID verifiziert wird. Daher ist es erfindungsgemäß vorgesehen, dass
-- die Fahrzeuge über eine eindeutige Identität im Verkehrssystem verfügen (die elektrooptisch erfasst werden kann; OID, z.B. Kennzeichen),
-- die Fahrzeuge ferner über eine eindeutige Identität im Mobilfunk (MID, z.B. MSISDN) verfügen und
-- eine Public-Key Infrastruktur (CI/CA) - d.h. eine Öffentliche-Schlüssel-Infrastrukturexistiert, die für Fahrzeuge die Kombination aus OID und MID mit entsprechenden Merkmalen zertifiziert.
In einem "Intelligent Transport System (ITS)" sind diese Voraussetzungen in der Regel gegeben.

Erfindungsgemäß findet die Kommunikation zwischen dem ersten Kommunikationspartner und dem zweiten Kommunikationspartner insbesondere mittels PC5-Sidelink statt, d.h. es kann erfindungsgemäß die in 3GPP in Mobilfunknetzen spezifizierte PC5 Broadcast Kommunikation genutzt werden (für LTE spezifiziert, für 5G in Arbeitvgl. 3gpp TR 36.785). Ein Mobilfunknetz (bzw. dessen Basisstationen bzw. Basisstationseinrichtungen) wird hierfür jedoch nicht zwingend benötigt. Dadurch kann das erfindungsgemäße Verfahren auch außerhalb erdgebundener Positionen oder außerhalb der Reichweite von Mobilfunknetzen genutzt werden. Die V2V PC5 Spezifikation ist/wird für LTE und für 5G spezifiziert, um insbesondere zwischen Endgeräten mit Hilfe eines Sendemasts kommunizieren zu können. Erfindungsgemäß wird hiervon insbesondere die PC5-Sidelink Funktionalität für die Endgerät-zu-Endgerät-Kommunikation ohne Unterstützung einer Basisstationseinrichtung genutzt. Die Endgerät-zu-Endgerät-Kommunikation entspricht erfindungsgemäß der Kommunikation eines Senders zu allen erreichbaren Empfängern, d.h. einer Broadcast- bzw. Rundsende-Nachricht. Erfindungsgemäß ist es jedoch nicht zwingend notwendig, dass eine exakte PC5 Spezifikation genutzt wird, sondern lediglich ein Broadcast Verfahren, das Nachrichten von einem Sender (erster Kommunikationspartner mit Position Pos1) an alle Kommunikationsteilnehmer in dessen Umkreis R1 um Pos1 (und damit auch an den Empfänger, d.h. den zweiten Kommunikationspartner, der sich voraussetzungsgemäß in räumlicher Nähe und somit auch in der betrachteten Funkreichweite befindet) senden kann, ohne dass deren Kommunikationsadressen bekannt sein müssen. Der ersten Kommunikationspartner fungiert in dieser Situation sozusagen als beweglicher Funkmast, dessen Sendestärke den Radius R1 im Wesentlichen festlegt. R1 ist aber auch in bekannter Weise von den Umgebungsparametern und den Empfangseigenschaften der Empfänger abhängig. In der PC5-Sidelink Standardisierung wird insbesondere von einem Wert für R1 von etwa 400 Metern ausgegangen. Sender und Empfänger können in diesem Fall also nicht mehr als 400 Meter voneinander entfernt sein.

Erfindungsgemäß findet über die rein örtliche Überprüfung hinaus eine Authentifizierung der Kommunikationspartner mittels einer "Public Key Infrastructure" (d.h. Öffentlicher-Schlüssel-Infrastruktur) mit "Certificate Issuer (CI) / Certificate Authority (CA)" statt. Dies ist eine bewährte Technik, in der die Identität und zugehörige Daten (z.B. Internet-Adresse und Firma, E-Mail-Adresse und Name oder Account/Konto) von einer zentralen Stelle (CI/CA, z.B. Mobilfunkunternehmen, Betreiber eines ITS) geprüft und mit einem digitalen Zertifikat bestätigt wird. Insbesondere wird hierfür ein Verschlüsselungsverfahren basierend auf asymmetrischer Kryptographie verwendet, d.h. der Zertifikatsinhaber hat ein privates Geheimnis (private key), zu dem es ein zugehöriges Datum bzw. Zertifikat (public key) gibt, mit welchem ein anderer Teilnehmer überprüfen kann, dass der Zertifikatsinhaber eine Nachricht elektronisch unterschrieben (signiert) hat; die CI/CA bestätigt in dem zugehörigen Zertifikat (insbesondere zu dem public key/öffentlichen Schlüssel) die Zusammengehörigkeit von zwei oder mehr Identitäten wie Name, E-Mail, Internetadresse, Account/Kontoinformation bzw. vorliegend die Zusammengehörigkeit des jeweiligen OID und entsprechendem MID der beteiligten Kommunikationspartner. Damit einem Zertifikat und damit der entsprechenden Identität vertraut werden kann, muss eine Identität zweifelsfrei überprüft werden können. Vorliegend bekommt Fahrzeug B die Identitäten (OID und MID), die vom Sender (Fahrzeug A) theoretisch beliebig vorgebbar wären, zusammen mit dem zughörigen Zertifikat gesendet, kann aber nur anhand der Nachricht keine der beiden Identitäten überprüfen. Hier wird beschrieben, wie man über eine elektrooptische Verifizierung der OID die Identität des Senders (Zugehörigkeit des Zertifikats) überprüfen und so das Fahrzeug authentisieren kann. Diese Identitätsprüfung ist bzgl. OID zusätzlich basierend auf Positionsprüfungen, da die OID an einer verifizierbaren Position überprüft werden kann/muss. Neben der Verwendung der Public-Key-Infrastruktur zum Signieren von Nachrichten ist es auch möglich, das Verschlüsseln von Nachrichteninhalten zu realisieren. Wenn B die Identität von A verifiziert hat (das Zertifikat bestätigt), kann B mit dem public key von A Nachrichteninhalte verschlüsseln. Danach ist ausschließlich A in der Lage, diese Nachrichtinhalte zu entschlüsselen. Auf diese Weise können A und B nach gegenseitiger Authentisierung verschlüsselt Nachrichteninhalte austauschen und damit sicher kommunizieren - selbst bei der Verwendung von Broadcast-Nachrichten.

Insbesondere ist es erfindungsgemäß in der nachfolgend beschriebenen Situation vorteilhaft möglich, dass der erste und zweite Kommunikationspartner (bzw. A-FZG und B-FZG) miteinander kommunizieren: A-FZG will B-FZG eine Handlungsanweisung bzw. einen Befehl senden, die B-FZG umsetzen soll, sofern B-FZG sich im Modus "autonomes Fahren" befindet (B-FZG handelt bspw. autonom ohne Eingriff eines Menschen). B-FZG muss also sicher sein, dass A-FZG der Absender ist, also A-FZG absolut sicher authentifiziert wird. In einem solchen Fall einer sicheren Authentifizierung ist auch die Handlungsanweisung der Nachricht bzw. der Befehl glaubwürdig. Das A-FZG will somit so schnell wie möglich mit einem speziellen B-FZG, das sich im elektrooptischen Sichtbereich von A-FZG befindet, kommunizieren und A und B sollen eine hohes Maß an Sicherheit haben, sich gegenseitig zu authentifizieren, wobei keine Zentraleinheit existiert, die das Autokennzeichen einer Mobilfunkadresse zuordnen kann und A kennt ursprünglich die Mobilfunkadresse von B nicht. Erfindungsgemäß ist in einer solchen Situation die Kommunikation durch die Verwendung einer Broadcast Message über PC5 Mode 4 und für Fahrzeuge mit autonomer Fahrzeug-Funktionalität bzgl. Sensorik und Kommunikation möglich.

## Patentansprüche

1. Verfahren zur authentifizierten Kommunikation zwischen einem ersten Kommunikationspartner (20) und einem zweiten Kommunikationspartner (40), wobei der erste Kommunikationspartner (20) und/oder der zweite Kommunikationspartner (40) ein Verkehrsteilnehmer und/oder Teil einer Verkehrsinfrastruktur ist, insbesondere ein teilautonom oder autonom gesteuertes, sich bewegendes Fahrzeug oder ein stationäres Objekt, wobei der erste und zweite Kommunikationspartner (20, 40) zu unterschiedlichen Zeitpunkten potentiell unterschiedliche Positionen (21, 22, 41, 42) aufweisen, wobei der erste Kommunikationspartner (20) neben einer optisch detektierbaren ersten Identitätsinformation eine weitere erste Identitätsinformation aufweist oder diese zugeordnet ist und wobei der zweite Kommunikationspartner (40) neben einer optisch detektierbaren zweiten Identitätsinformation eine weitere zweite Identitätsinformation aufweist oder diese zugeordnet ist, wobei das Verfahren die nachfolgenden Schritte umfasst:
-- in einem ersten Schritt wird zu einem ersten Zeitpunkt durch den ersten Kommunikationspartner (20) eine erste Entfernungsinformation zum zweiten Kommunikationspartner (40) und die optisch detektierbare zweite Identitätsinformation des zweiten Kommunikationspartners (40) bestimmt oder erfasst und es wird eine erste Nachricht drahtlos ausgesendet, wobei die erste Nachricht die erste Entfernungsinformation, die optisch detektierbare zweite Identitätsinformation des zweiten Kommunikationspartners (40), die optisch detektierbare erste Identitätsinformation und die weitere erste Identitätsinformation des ersten Kommunikationspartners (20) sowie eine Signaturinformation des ersten Kommunikationspartners (20) umfasst,
-- in einem zweiten Schritt wird die erste Nachricht durch den zweiten Kommunikationspartner (40) empfangen und als Teil der ersten Nachricht die optisch detektierbare zweite Identitätsinformation des zweiten Kommunikationspartners (40) detektiert oder erfasst sowie die Signaturinformation durch den zweiten Kommunikationspartner (40) verifiziert,
-- in einem dritten Schritt wird zu einem zweiten Zeitpunkt durch den zweiten Kommunikationspartner (40) eine zweite Entfernungsinformation zum ersten Kommunikationspartner (20) und die optisch detektierbare erste Identitätsinformation des ersten Kommunikationspartners (20) bestimmt oder erfasst und es wird eine zweite Nachricht drahtlos ausgesendet, wobei die zweite Nachricht die zweite Entfernungsinformation, die optisch detektierbare erste Identitätsinformation und/oder die weitere erste Identitätsinformation des ersten Kommunikationspartners (20), die optisch detektierbare zweite Identitätsinformation und die weitere zweite Identitätsinformation des zweiten Kommunikationspartners (40) sowie eine weitere Signaturinformation des zweiten Kommunikationspartners (40) umfasst, wobei die zweite Nachricht durch den ersten Kommunikationspartner (20) empfangen und die weitere Signaturinformation durch den ersten Kommunikationspartner (20) verifiziert wird, wobei - zusätzlich zur Verifizierung der Signaturinformation - durch einen Vergleich der ersten und zweiten Entfernungsinformation durch den zweiten Kommunikationspartner (40) die Identität des ersten Kommunikationspartners (20) verifiziert wird und/oder dass - zusätzlich zur Verifizierung der weiteren Signaturinformation - durch einen Vergleich der ersten und zweiten Entfernungsinformation durch den ersten Kommunikationspartner (20) die Identität des zweiten Kommunikationspartners (40) verifiziert wird.

2. Verfahren nach einem der vorhergehenden Ansprüche, **dadurch gekennzeichnet, dass** die erste Nachricht und/oder die zweite Nachricht eine Rundsendenachricht, broadcast-Nachricht, ist, wobei die erste und zweite Nachricht insbesondere eine PC5 und/oder Mode 4 Nachricht gemäß dem 3GPP Mobilfunkstandard ist.

3. Verfahren nach einem der vorhergehenden Ansprüche, **dadurch gekennzeichnet, dass** die Entfernungsinformation eine Vektorinformation ist bezogen auf den Differenzvektor zwischen einer ersten Position (21) des ersten Kommunikationspartners (20) und einer ersten Position (41) des zweiten Kommunikationspartners (40) zum ersten Zeitpunkt und/oder dass die weitere Entfernungsinformation eine Vektorinformation ist bezogen auf den Differenzvektor zwischen einer zweiten Position (22) des ersten Kommunikationspartners (20) und einer zweiten Position (42) des zweiten Kommunikationspartners (40) zum zweiten Zeitpunkt,
wobei insbesondere die erste Nachricht eine erste Geschwindigkeitsinformation (21') des ersten Kommunikationspartners (20) und eine Zeitinformation bezüglich des ersten Zeitpunkts umfasst und/oder insbesondere die zweite Nachricht eine zweite Geschwindigkeitsinformation (42') des zweiten Kommunikationspartners (40) und eine Zeitinformation bezüglich des zweiten Zeitpunkts umfasst.

4. Verfahren nach einem der vorhergehenden Ansprüche, **dadurch gekennzeichnet, dass** die weitere erste und die weitere zweite Identitätsinformation jeweils eine Identitätsinformation eines im ersten Kommunikationspartner (20) und im zweiten Kommunikationspartner (40) jeweils eingebauten zu einem Telekommunikationsnetz zugehörigen Telekommunikationsendgeräts sind, welche jeweils Teil einer Öffentliche-Schlüssel-Infrastruktur, PKI, public key infrastructure, sind, wobei dem ersten Kommunikationspartner (20) eine erste private Schlüsselinformation und eine erste Zertifikatsinformation und dem zweiten Kommunikationspartner (40) eine zweite private Schlüsselinformation und eine zweite Zertifikatsinformation zugeordnet ist, wobei die Signaturinformation eine mit der ersten privaten Schlüsselinformation verschlüsselte Information des ersten Kommunikationspartners (20) und die weitere Signaturinformation eine mit der zweiten privaten Schlüsselinformation verschlüsselte Information des zweiten Kommunikationspartners (40) ist.

5. Verfahren nach Anspruch 4,
**dadurch gekennzeichnet,**
**dass** die erste Nachricht die erste Zertifikatsinformation umfasst und/oder dass die zweite Nachricht die zweite Zertifikatsinformation umfasst,
oder dass die erste Zertifikatsinformation an den zweiten Kommunikationspartner (40) übertragen wird und/oder dass die zweite Zertifikatsinformation an den ersten Kommunikationspartner (20) übertragen wird, insbesondere drahtlos und insbesondere von einer zentralen Stelle und insbesondere auf Anfrage des jeweiligen Kommunikationspartners (20, 40).

6. Verfahren nach einem der vorhergehenden Ansprüche, **dadurch gekennzeichnet, dass** die optisch detektierbare erste und/oder zweite Identitätsinformation dem Informationsinhalt des Fahrzeugkennzeichens entspricht.

7. System zur authentifizierten Kommunikation zwischen einem ersten Kommunikationspartner (20) und einem zweiten Kommunikationspartner (40), wobei der erste Kommunikationspartner (20) und/oder der zweite Kommunikationspartner (40) ein Verkehrsteilnehmer und/oder Teil einer Verkehrsinfrastruktur ist, insbesondere ein teilautonom oder autonom gesteuertes, sich bewegendes Fahrzeug oder ein stationäres Objekt, wobei das System den ersten und zweiten Kommunikationspartner (20, 40) umfasst und der erste und zweite Kommunikationspartner (20, 40) zu unterschiedlichen Zeitpunkten potentiell unterschiedliche Positionen (21, 22, 41, 42) aufweisen, wobei der erste Kommunikationspartner (20) neben einer optisch detektierbaren ersten Identitätsinformation eine weitere erste Identitätsinformation aufweist oder diese zugeordnet ist und wobei der zweite Kommunikationspartner (40) neben einer optisch detektierbaren zweiten Identitätsinformation eine weitere zweite Identitätsinformation aufweist oder diese zugeordnet ist, wobei das System derart konfiguriert ist, dass:
-- zu einem ersten Zeitpunkt durch den ersten Kommunikationspartner (20) eine erste Entfernungsinformation zum zweiten Kommunikationspartner (40) und die optisch detektierbare zweite Identitätsinformation des zweiten Kommunikationspartners (40) bestimmt oder erfasst wird und eine erste Nachricht drahtlos ausgesendet wird, wobei die erste Nachricht die erste Entfernungsinformation, die optisch detektierbare zweite Identitätsinformation des zweiten Kommunikationspartners (40), die optisch detektierbare erste Identitätsinformation und die weitere erste Identitätsinformation des ersten Kommunikationspartners (20) sowie eine Signaturinformation des ersten Kommunikationspartners (20) umfasst,
-- die erste Nachricht durch den zweiten Kommunikationspartner (40) empfangen und als Teil der ersten Nachricht die optisch detektierbare zweite Identitätsinformation des zweiten Kommunikationspartners (40) detektiert oder erfasst sowie die Signaturinformation durch den zweiten Kommunikationspartner (40) verifiziert wird,
-- zu einem zweiten Zeitpunkt durch den zweiten Kommunikationspartner (40) eine zweite Entfernungsinformation zum ersten Kommunikationspartner (20) und die optisch detektierbare erste Identitätsinformation des ersten Kommunikationspartners (20) bestimmt oder erfasst wird und eine zweite Nachricht drahtlos ausgesendet wird, wobei die zweite Nachricht die zweite Entfernungsinformation, die optisch detektierbare erste Identitätsinformation und/oder die weitere erste Identitätsinformation des ersten Kommunikationspartners (20), die optisch detektierbare zweite Identitätsinformation und die weitere zweite Identitätsinformation des zweiten Kommunikationspartners (40) sowie eine weitere Signaturinformation des zweiten Kommunikationspartners (40) umfasst, wobei die zweite Nachricht durch den ersten Kommunikationspartner (20) empfangen und die weitere Signaturinformation durch den ersten Kommunikationspartner (20) verifiziert wird, wobei das System derart konfiguriert ist, dass - zusätzlich zur Verifizierung der Signaturinformation - durch einen Vergleich der ersten und zweiten Entfernungsinformation durch den zweiten Kommunikationspartner (40) die Identität des ersten Kommunikationspartners (20) verifiziert wird und/oder dass - zusätzlich zur Verifizierung der weiteren Signaturinformation - durch einen Vergleich der ersten und zweiten Entfernungsinformation durch den ersten Kommunikationspartner (20) die Identität des zweiten Kommunikationspartners (40) verifiziert wird.

8. Kommunikationspartner (20, 40) zur authentifizierten Kommunikation zwischen einem ersten Kommunikationspartner (20) und einem zweiten Kommunikationspartner (40), wobei der Kommunikationspartner (20, 40) dazu konfiguriert ist, als erster Kommunikationspartner (20) oder als zweiter Kommunikationspartner (40) eines Systems nach Anspruch 7 zu fungieren.

9. Computerprogramm umfassend Befehle, mit deren Hilfe die Schritte eines Verfahrens nach einem der Ansprüche 1 bis 6 durchführbar sind, wenn das Computerprogramm auf einer programmierbaren Einrichtung, insbesondere auf dem ersten Kommunikationspartner (20) oder einer programmierbaren Einrichtung des ersten Kommunikationspartners (20) und/oder auf dem zweiten Kommunikationspartner (40) oder einer programmierbaren Einrichtung des zweiten Kommunikationspartners (40), ausgeführt wird.

10. Computerlesbares Medium, vorgesehen zur Speicherung eines Computerprogramms, oder Datenträgersignal, vorgesehen zur Übertragung eines Computerprogramms, wobei das computerlesbare Medium oder das Datenträgersignal das Computerprogramm nach Anspruch 9 speichert oder überträgt oder wobei das computerlesbare Medium oder das Datenträgersignal den auf einer programmierbaren Einrichtung, insbesondere auf dem ersten Kommunikationspartner (20) oder einer programmierbaren Einrichtung des ersten Kommunikationspartners (20) und/oder auf dem zweiten Kommunikationspartner (40) oder einer programmierbaren Einrichtung des zweiten Kommunikationspartners (40), auszuführenden Teil des Computerprogramms nach Anspruch 9 speichert oder überträgt.

## Claims

1. Method for authenticated communication between a first communication partner (20) and a second communication partner (40), the first communication partner (20) and/or the second communication partner (40) being a transport user and/or part of a traffic infrastructure, in particular an autonomously or partially autonomously controlled moving vehicle or a stationary object, the first and second communication partner (20, 40) potentially having different positions (21, 22, 41, 42) at different times, the first communication partner (20) having or being assigned, in addition to an optically detectable first piece of identity information, a further first piece of identity information, and the second communication partner (40) having or being assigned, in addition to an optically detectable second piece of identity information, a further second piece of identity information, the method comprising the following steps:
- in a first step, at a first time, the first communication partner (20) determines or recognises a first piece of distance information regarding the second communication partner (40) and the optically detectable second piece of identity information of the second communication partner (40), and sends a first message wirelessly, the first message comprising the first piece of distance information, the optically detectable second piece of identity information of the second communication partner (40), the optically detectable first piece of identity information and the further first piece of identity information of the first communication partner (20), as well as a piece of signature information of the first communication partner (20),
- in a second step, the first message is received by the second communication partner (40) and the optically detectable second piece of identity information of the second communication partner (40) is detected or recognised as part of the first message, as well as the signature information being verified by the second communication partner (40),
- in a third step, at a second time, the second communication partner (40) determines or recognises a second piece of distance information regarding the first communication partner (20) and the optically detectable first piece of identity information of the first communication partner (20), and sends a second message wirelessly, the second message comprising the second piece of distance information, the optically detectable first piece of identity information and/or the further first piece of identity information of the first communication partner (20), the optically detectable second piece of identity information and the further second piece of identity information of the second communication partner (40), as well as a further piece of signature information of the second communication partner (40), the second message being received by the first communication partner (20) and the further piece of signature information being verified by the first communication partner (20), wherein the second communication partner (40) verifies the identity of the first communication partner (20) - in addition to verifying the piece of signature information - by comparing the first and second pieces of distance information, and/or wherein the first communication partner (20) verifies the identity of the second communication partner (40) - in addition to verifying the further piece of signature information - by comparing the first and second pieces of distance information.

2. Method according to any of the preceding claims, **characterised**
**in that** the first message and/or the second message are broadcast messages, the first and second message in particular being PC5 and/or Mode 4 messages under the 3GPP mobile communications standard.

3. Method according to any of the preceding claims, **characterised**
**in that** the piece of distance information is a piece of vector information based on the difference vector between a first position (21) of the first communication partner (20) and a first position (41) of the second communication partner (40) at the first time, and/or in that the further piece of distance information is a piece of vector information based on the difference vector between a second position (22) of the first communication partner (20) and a second position (42) of the second communication partner (40) at the second time, in particular the first message comprising a first piece of speed information (21') of the first communication partner (20) and a piece of time information relating to the first time and/or in particular the second message comprising a second piece of speed information (42') of the second communication partner (40) and a piece of time information relating to the second time.

4. Method according to any of the preceding claims, **characterised**
**in that** the further first and further second pieces of identify information are each a piece of identity information of a telecommunications terminal, which is installed in the first communication partner (20) or second communication partner (40) respectively and associated with a telecommunications network and which is in each case part of a public key infrastructure (PKI), the first communication partner (20) being assigned a first piece of private key information and a first piece of certificate information, and the second communication partner (40) being assigned a second piece of private key information and a second piece of certificate information, the piece of signature information being a piece of information of the first communication partner (20) encrypted using the first piece of private key information, and the further piece of signature information being a piece of information of the second communication partner (40) encrypted using the second piece of private key information.

5. Method according to claim 4, **characterised**
**in that** the first message comprises the first piece of certificate information and/or in that the second message comprises the second piece of certificate information,
or in that the first piece of certificate information is transmitted to the second communication partner (40) and/or in that the second piece of certificate information is transmitted to the first communication partner (20), in particular wirelessly and in particular from a central point and in particular at the request of the communication partner (20, 40) in question.

6. Method according to any of the preceding claims, **characterised**
**in that** the optically detectable first and/or second piece of identity information corresponds to the information content of the vehicle registration number.

7. System for authenticated communication between a first communication partner (20) and a second communication partner (40), the first communication partner (20) and/or the second communication partner (20) being a transport user and/or part of a traffic infrastructure, in particular an autonomously or partially autonomously controlled moving vehicle or a stationary object, the system comprising the first and second communication partners (20, 40), and the first and second communication partner (20, 40) potentially having different positions (21, 22, 41, 42) at different times, the first communication partner (20) having or being assigned, in addition to an optically detectable first piece of identity information, a further first piece of identity information, and the second communication partner (40) having or being assigned, in addition to an optically detectable second piece of identity information, a further second piece of identity information, the system being configured in such a way that:
- at a first time, the first communication partner (20) determines or recognises a first piece of distance information regarding the second communication partner (40) and the optically detectable second piece of identity information of the second communication partner (40), and sends a first message wirelessly, the first message comprising the first piece of distance information, the optically detectable second piece of identity information of the second communication partner (40), the optically detectable first piece of identity information and the further first piece of identity information of the first communication partner (20), as well as a piece of signature information of the first communication partner (20),
- the first message is received by the second communication partner (40) and the optically detectable second piece of identity information of the second communication partner (40) is detected or recognised as part of the first message, as well as the signature information being verified by the second communication partner (40),
- at a second time, the second communication partner (40) determines or recognises a second piece of distance information regarding the first communication partner (20) and the optically detectable first piece of identity information of the first communication partner (20), and sends a second message wirelessly, the second message comprising the second piece of distance information, the optically detectable first piece of identity information and/or the further first piece of identity information of the first communication partner (20), the optically detectable second piece of identity information and the further second piece of identity information of the second communication partner (40), as well as a further piece of signature information of the second communication partner (40), the second message being received by the first communication partner (20) and the further piece of signature information being verified by the first communication partner (20), wherein the system is configured in such a way that the second communication partner (40) verifies the identity of the first communication partner (20) - in addition to verifying the piece of signature information - by comparing the first and second pieces of distance information, and/or in such a way that the first communication partner (20) verifies the identity of the second communication partner (40) - in addition to verifying the further piece of signature information - by comparing the first and second pieces of distance information.

8. Communication partner (20, 40) for authenticated communication between a first communication partner (20) and a second communication partner (40), wherein the communication partner (20, 40) is configured to act as a first communication partner (20) or as a second communication partner (40) of a system according to claim 7.

9. Computer program comprising commands by way of which the steps of a method according to any of claims 1 to 6 can be carried out when the computer program is run on a programmable device, in particular on the first communication partner (20) or a programmable device of the first communication partner (20) and/or on the second communication partner (40) or a programmable device of the second communication partner (40).

10. Computer-readable medium provided for storing a computer program or data carrier signal provided for transmitting a computer program, wherein the computer-readable medium or data carrier signal stores or transmits the computer program according to claim 9, or wherein the computer-readable medium or data carrier signal stores or transmits the part of the computer program according to claim 9 which is to be run on a programmable device, in particular on the first communication partner (20) or a programmable device of the first communication partner (20) and/or on the second communication partner (40) or a programmable device of the second communication partner (40).

## Revendications

1. Procédé pour une communication authentifiée entre un premier partenaire de communication (20) et un deuxième partenaire de communication (40), le premier partenaire de communication (20) et/ou le deuxième partenaire de communication (40) étant un usager de la route et/ou une partie d'une infrastructure de circulation, en particulier un véhicule en mouvement à commande semi-autonome ou autonome ou un objet stationnaire, le premier et le deuxième partenaire de communication (20, 40) présentant des positions (21, 22, 41, 42) potentiellement différentes à des instants différents, le premier partenaire de communication (20) présentant, outre une première information d'identité détectable optiquement, une autre première information d'identité ou étant associé à celle-ci et le deuxième partenaire de communication (40) présentant, outre une deuxième information d'identité détectable optiquement, une autre deuxième information d'identité ou étant associé à celle-ci, le procédé comprenant les étapes suivantes :
- dans une première étape, à un premier instant, une première information de distance par rapport au deuxième partenaire de communication (40) et la deuxième information d'identité détectable optiquement du deuxième partenaire de communication (40) sont déterminées ou saisies par le premier partenaire de communication (20) et un premier message est émis sans fil, le premier message comprenant la première information de distance, la deuxième information d'identité détectable optiquement du deuxième partenaire de communication (40), la première information d'identité détectable optiquement et l'autre première information d'identité du premier partenaire de communication (20) ainsi qu'une information de signature du premier partenaire de communication (20),
- dans une deuxième étape, le premier message est reçu par le deuxième partenaire de communication (40) et, en tant que partie du premier message, la deuxième information d'identité détectable optiquement du deuxième partenaire de communication (40) est détectée ou saisie et l'information de signature est vérifiée par le deuxième partenaire de communication (40),
- dans une troisième étape, à un deuxième instant, une deuxième information de distance par rapport au premier partenaire de communication (20) et la première information d'identité détectable optiquement du premier partenaire de communication (20) sont déterminées ou saisies par le deuxième partenaire de communication (40) et un deuxième message est émis sans fil, le deuxième message comprenant la deuxième information de distance, la première information d'identité détectable optiquement et/ou l'autre première information d'identité du premier partenaire de communication (20), la deuxième information d'identité détectable optiquement et l'autre deuxième information d'identité du deuxième partenaire de communication (40) ainsi qu'une autre information de signature du deuxième partenaire de communication (40), le deuxième message étant reçu par le premier partenaire de communication (20) et l'autre information de signature étant vérifiée par le premier partenaire de communication (20), l'identité du premier partenaire de communication (20) étant vérifiée - en plus de la vérification de l'information de signature - par une comparaison de la première et de la deuxième information de distance par le deuxième partenaire de communication (40) et/ou l'identité du deuxième partenaire de communication (40) étant vérifiée - en plus de la vérification de l'autre information de signature - par une comparaison de la première et de la deuxième information de distance par le premier partenaire de communication (20).

2. Procédé selon l'une des revendications précédentes, **caractérisé en ce que** le premier message et/ou le deuxième message est un message de diffusion, ou message broadcast, le premier et le deuxième message étant en particulier un message PC5 et/ou mode 4 selon la norme de radiocommunication mobile 3GPP.

3. Procédé selon l'une des revendications précédentes, **caractérisé en ce que** l'information de distance est une information vectorielle relative au vecteur de différence entre une première position (21) du premier partenaire de communication (20) et une première position (41) du deuxième partenaire de communication (40) au premier instant et/ou que l'autre information de distance est une information vectorielle relative au vecteur de différence entre une deuxième position (22) du premier partenaire de communication (20) et une deuxième position (42) du deuxième partenaire de communication (40) au deuxième instant,
en particulier le premier message comprenant une première information de vitesse (21') du premier partenaire de communication (20) et une information de temps relative au premier instant et/ou en particulier le deuxième message comprenant une deuxième information de vitesse (42') du deuxième partenaire de communication (40) et une information de temps relative au deuxième instant.

4. Procédé selon l'une des revendications précédentes, **caractérisé en ce que** l'autre première et l'autre deuxième information d'identité sont chacune une information d'identité d'un terminal de télécommunication intégré à un réseau de télécommunication dans le premier partenaire de communication (20) et dans le deuxième partenaire de communication (40), qui font chacun partie d'une infrastructure à clés publiques (PKI, public key infrastructure), une première information de clé privée et une première information de certificat étant associées au premier partenaire de communication (20) et une deuxième information de clé privée et une deuxième information de certificat étant associées au deuxième partenaire de communication (40), l'information de signature étant une information du premier partenaire de communication (20) cryptée avec la première information de clé privée et l'autre information de signature étant une information du deuxième partenaire de communication (40) cryptée avec la deuxième information de clé privée.

5. Procédé selon la revendication 4, **caractérisé en ce**
**que** le premier message comprend la première information de certificat et/ou que le deuxième message comprend la deuxième information de certificat,
ou que la première information de certificat est transmise au deuxième partenaire de communication (40) et/ou que la deuxième information de certificat est transmise au premier partenaire de communication (20), en particulier sans fil et en particulier depuis un emplacement central et en particulier sur demande du partenaire de communication respectif (20, 40).

6. Procédé selon l'une des revendications précédentes, **caractérisé en ce que** la première et/ou la deuxième information d'identité détectable optiquement correspond au contenu d'information de la plaque d'immatriculation du véhicule.

7. Système pour une communication authentifiée entre un premier partenaire de communication (20) et un deuxième partenaire de communication (40), le premier partenaire de communication (20) et/ou le deuxième partenaire de communication (40) étant un usager de la route et/ou une partie d'une infrastructure de circulation, en particulier un véhicule en mouvement à commande semi-autonome ou autonome ou un objet stationnaire, le système comprenant le premier et le deuxième partenaire de communication (20, 40) et le premier et le deuxième partenaire de communication (20, 40) présentant des positions (21, 22, 41, 42) potentiellement différentes à des instants différents, le premier partenaire de communication (20) présentant, outre une première information d'identité détectable optiquement, une autre première information d'identité ou étant associé à celle-ci et le deuxième partenaire de communication (40) présentant, outre une deuxième information d'identité détectable optiquement, une autre deuxième information d'identité ou étant associé à celle-ci, le système étant configuré de telle sorte que :
- à un premier instant, une première information de distance par rapport au deuxième partenaire de communication (40) et la deuxième information d'identité détectable optiquement du deuxième partenaire de communication (40) sont déterminées ou saisies par le premier partenaire de communication (20) et un premier message est émis sans fil, le premier message comprenant la première information de distance, la deuxième information d'identité détectable optiquement du deuxième partenaire de communication (40), la première information d'identité détectable optiquement et l'autre première information d'identité du premier partenaire de communication (20) ainsi qu'une information de signature du premier partenaire de communication (20),
- le premier message est reçu par le deuxième partenaire de communication (40) et, en tant que partie du premier message, la deuxième information d'identité détectable optiquement du deuxième partenaire de communication (40) est détectée ou saisie et l'information de signature est vérifiée par le deuxième partenaire de communication (40),
- à un deuxième instant, une deuxième information de distance par rapport au premier partenaire de communication (20) et la première information d'identité détectable optiquement du premier partenaire de communication (20) sont déterminées ou saisies par le deuxième partenaire de communication (40) et un deuxième message est émis sans fil, le deuxième message comprenant la deuxième information de distance, la première information d'identité détectable optiquement et/ou l'autre première information d'identité du premier partenaire de communication (20), la deuxième information d'identité détectable optiquement et l'autre deuxième information d'identité du deuxième partenaire de communication (40) ainsi qu'une autre information de signature du deuxième partenaire de communication (40), le deuxième message étant reçu par le premier partenaire de communication (20) et l'autre information de signature étant vérifiée par le premier partenaire de communication (20), le système étant configuré de telle sorte que l'identité du premier partenaire de communication (20) est vérifiée - en plus de la vérification de l'information de signature - par une comparaison de la première et de la deuxième information de distance par le deuxième partenaire de communication (40) et/ou que l'identité du deuxième partenaire de communication (40) est vérifiée - en plus de la vérification de l'autre information de signature - par une comparaison de la première et de la deuxième information de distance par le premier partenaire de communication (20).

8. Partenaire de communication (20, 40) pour une communication authentifiée entre un premier partenaire de communication (20) et un deuxième partenaire de communication (40), le partenaire de communication (20, 40) étant configuré pour fonctionner comme premier partenaire de communication (20) ou comme deuxième partenaire de communication (40) d'un système selon la revendication 7.

9. Programme d'ordinateur comprenant des instructions à l'aide desquelles les étapes d'un procédé selon l'une des revendications 1 à 6 peuvent être mises en œuvre lorsque le programme d'ordinateur est exécuté sur un dispositif programmable, en particulier sur le premier partenaire de communication (20) ou sur un dispositif programmable du premier partenaire de communication (20) et/ou sur le deuxième partenaire de communication (40) ou sur un dispositif programmable du deuxième partenaire de communication (40).

10. Support lisible par ordinateur, prévu pour stocker un programme d'ordinateur, ou signal de support de données, prévu pour transmettre un programme d'ordinateur, le support lisible par ordinateur ou le signal de support de données stockant ou transmettant le programme d'ordinateur selon la revendication 9, ou le support lisible par ordinateur ou le signal de support de données stockant ou transmettant la partie du programme d'ordinateur selon la revendication 9 à exécuter sur un dispositif programmable, en particulier sur le premier partenaire de communication (20) ou sur un dispositif programmable du premier partenaire de communication (20) et/ou sur le deuxième partenaire de communication (40) ou sur un dispositif programmable du deuxième partenaire de communication (40).
